# EUROPEAN PATENT APPLICATION

(11) **EP 4 113 154 A1**
(43) Date of publication of application: **04.01.2023**
(21) Application number: 22177888.9
(22) Date of filing: 08.06.2022
(51) Int. Cl.: G01S 7/00, G01S 7/41, G01S 13/931, H04W 4/46

(54) **IMPROVING ACCURACY OF PREDICTIONS ON RADAR DATA USING VEHICLE-TO-VEHICLE TECHNOLOGY**

(30) Priority: 02.07.2021 US 202163218248 P; 26.10.2021 US 202163272090 P; 26.01.2022 US 202263303347 P; 11.05.2022 US 202217662998
(71) Applicant: Aptiv Technologies Limited, St. Michael (BB)
(72) Inventor: Billapati, Rajashekar, Kokomo, IN, 46901 (US); Tyagi, Kanishka, Agoura Hills, CA, 91301 (US); Manukian, Narbik, Los Angeles, CA, 90045 (US)
(74) Representative: Manitz Finsterwald Patent- und Rechtsanwaltspartnerschaft mbB

(57) **Abstract**

This document describes techniques and systems for improving accuracy of predictions on radar data using vehicle-to-vehicle (V2V) technology. V2V communications data and the matching sensor data related to one or more vehicles in the vicinity of a host vehicle are collected. The V2V data is used as label data and the radar data is used as the input data for training the model. The training may either occur onboard the host vehicle or remotely. Further, multiple host vehicles may contribute data to train the model. Once the model has been updated with the included training, the updated model is deployed to the sensor tracking system of the host vehicle. By using the dataset that includes the V2V communications data and the matching sensor data, the updated model may accurately track other vehicles and enable the host vehicle to utilize advanced driver-assistance systems safely and reliably.

## Description

### BACKGROUND

Advanced safety or driving systems for vehicles may use sensors to track nearby objects. These objects may include other vehicles, pedestrians, and animals, as well as inanimate objects, such as trees and street signs. The sensors (e.g., optical cameras, radar, lidar) collect low-level data that is processed in different ways to estimate positions, trajectories, and movements of the objects. Often, machine-learned models are used to estimate objects in or near a road; predictions are made while sensor data is collected and input to the models. For machine-learned models to quickly and accurately predict object whereabouts and movements in and around a road, the models need to be trained using large complex datasets that address as many different driving scenarios as possible. Manually generating a huge or intricate dataset that is sufficiently detailed and complex to be used for training a machine-learned model that assists with sensor based driving can be a challenging and time consuming task.

### SUMMARY

This document describes techniques, systems, and methods for improving accuracy of predictions on radar data using vehicle-to-vehicle (V2V) technology. In one example, a method includes receiving, from a V2V communications platform of a host vehicle, V2V communications data from one or more other vehicles in a vicinity of the host vehicle. The method also includes receiving sensor data generated by a sensor system of the host vehicle indicative of the one or more other vehicles. The method further includes updating a model to generate an updated model by inputting the V2V communications data from the one or more other vehicles as label data for the sensor data, inputting the sensor data to the model, and training the model based on the sensor data and the V2V communications data. The method further includes deploying the updated model to the host vehicle for detecting and tracking objects in the vicinity of the host vehicle.

In another example, a system includes one or more processors configured to receive, from a V2V communications platform of a first vehicle, V2V communications data from one or more other vehicles in a vicinity of the first vehicle. The one or more processors are also configured to receive, from a sensor system of the first host vehicle, sensor data related to the one or more other vehicles. The one or more processors are further configured to update a model to generate an updated model by inputting, to the model, the V2V communications data from the one or more other vehicles as label data for the sensor data, inputting the sensor data to the model, and training the model based on the sensor data and the V2V communications data. The one or more processors are further configured to deploy the updated model to the first vehicle for detecting and tracking objects in the vicinity of the first vehicle. The system may be located remotely from the vehicle.

In another example, a system includes one or more processors configured to receive, from a V2V communications platform of a host vehicle, V2V communications data from one or more other vehicles in a vicinity of the host vehicle. The one or more processors are also configured to receive, from a sensor system of the first host vehicle, sensor data related to the one or more other vehicles. The one or more processors are further configured to update a model to generate an updated model by inputting, to the model, the V2V communications data from the one or more other vehicles as label data for the sensor data, inputting the sensor data to the model, and training the model based on the sensor data and the V2V communications data. The one or more processors are further configured to output the updated model to the host vehicle for detecting and tracking objects in the vicinity of the host vehicle. The system may be located on the host vehicle.

This Summary introduces simplified concepts related to improving accuracy of predictions on radar data using V2V technology, further described in the Detailed Description and Drawings. This Summary is not intended to identify essential features of the claimed subject matter, nor is it intended for use in determining the scope of the claimed subject matter. Although primarily described in the context of improving the accuracy of predictions on radar data using V2V communications data, the techniques for using V2V communications data as ground truth data for training sensor-based models can be applied to other applications where accuracy of trained models are desired. Further, these techniques may also be applied to other communications data such as vehicle-to-infrastructure (V2I), vehicle-to-pedestrian (V2P), and vehicle-to-everything data (V2X).

### BRIEF DESCRIPTION OF THE DRAWINGS

The details of one or more aspects of improving accuracy of predictions on radar data using V2V technology are described in this document with reference to the following figures, in which same numbers are used throughout to indicate like components:
FIG. 1 illustrates an example operating environment of a vehicle that is configured to improve accuracy of predictions on radar data using V2V technology, in accordance with techniques of this disclosure;
FIG. 2-1 illustrates an example of an automotive system for improving accuracy of predictions on radar data using V2V technology, in accordance with techniques of this disclosure;
FIG. 2-2 illustrates another example of an automotive system for improving accuracy of predictions on radar data using V2V technology, in accordance with techniques of this disclosure;
FIG. 3 illustrates an example implementation using a local model training system for improving accuracy of predictions on radar data using V2V technology, in accordance with techniques of this disclosure;
FIG. 4 illustrates another example implementation using a remote model training system for improving accuracy of predictions on radar data using V2V technology, in accordance with techniques of this disclosure;
FIG. 5 illustrates an example flowchart for improving accuracy of predictions on radar data using V2V technology, in accordance with techniques of this disclosure; and
FIG. 6 illustrates an example method for improving accuracy of predictions on radar data using V2V technology, in accordance with techniques of this disclosure.

### DETAILED DESCRIPTION

### OVERVIEW

As vehicles are more often being equipped with autonomous and semi-autonomous systems, machine-learned trained models are being used to assist these systems in object recognition, identification, and/or object tracking applications. The trained models provide a minimum level of accuracy to the sensor systems (e.g., optical cameras, radar, lidar, ultrasonic sensors) and enable the sensor systems to reliably detect and track various objects (e.g., other vehicles, pedestrians, animals, stationary objects such as road signs and vegetation). However, accuracy of the trained models can improve, for example, as the trained models are provided better training data sets (e.g., a larger dataset can account for more object types and driving scenarios). Generating datasets that improve the training of models has been tried, however, several issues remain as obstacles to the creation of the datasets.

One issue is gathering reliable information for the datasets. Sensor data alone may not provide enough accuracy to reliably train the models. However, as recognized by this disclosure, pairing the sensor data with other highly accurate data may overcome this deficiency. For example, sensor data and V2V communications data can be used in combination to improve the accuracy of datasets used to train machine-learned models. While this disclosure primarily describes these training datasets in relation to radar data combined with V2V communications data, the concepts disclosed herein may, likewise, be applied to other combinations of sensor data (e.g., lidar, camera) and other vehicle communications data (e.g., V2I, V2P).

Another issue is finding information sources that can provide values that populate these very large datasets. A solution to this issue, as described herein, is to leverage information gathering already provided by other vehicles or infrastructure near or on the roads. By using data collected by many vehicles in many different environmental and driving scenarios (e.g., urban environments versus rural environments, city scenarios versus non-city scenarios), large quantities of data can be acquired to encompass many different real-world scenarios. By training models with sensor data, in combination with accurate V2V communications data, the models of vehicles may more-accurately or more-quickly detect and track objects and avoid collisions with the objects, than when using models trained in other ways.

This document describes techniques and systems for improving accuracy of predictions on radar data using V2V technology. V2V communications data and the matching sensor data related to one or more vehicles in the vicinity of a host vehicle are collected. The V2V data is used as label data and the radar data is used as the input data for training the model. The training may either occur onboard the host vehicle or remotely (e.g., in a cloud). Further, multiple host vehicles may contribute data to train the model. Once the model has been updated with the included training, the updated model is deployed to the sensor tracking system of the host vehicle. By using the dataset that includes the V2V communications data and the matching sensor data, the updated model may accurately track other vehicles and enable the host vehicle to utilize advanced driver-assistance systems safely and reliably.

### EXAMPLE ENVIRONMENT

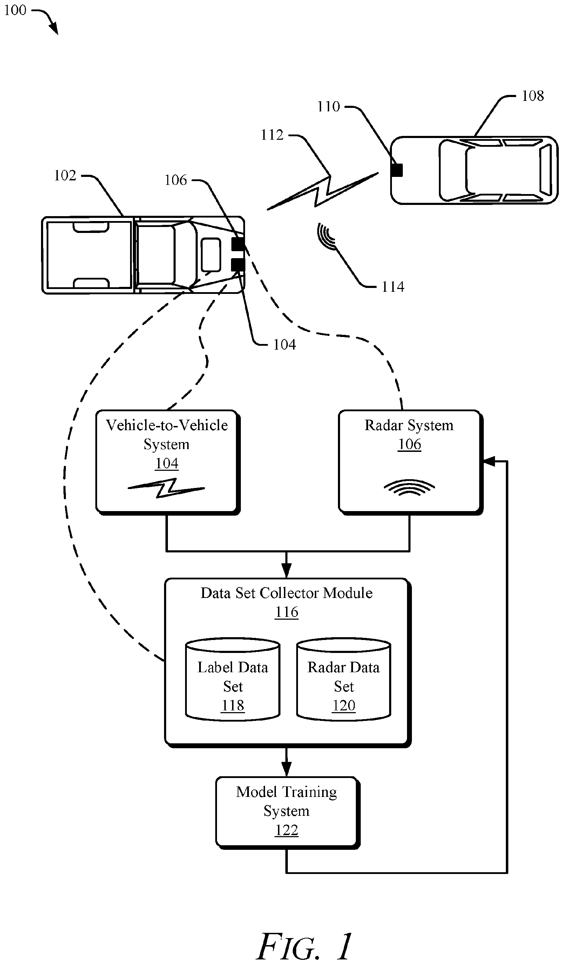

FIG. 1 illustrates an example operating environment 100 of a host vehicle 102 that is configured to improve accuracy of predictions on radar data using V2V technology, in accordance with techniques of this disclosure. In the depicted environment 100, a V2V system 104 and a radar system 106 are mounted to, or integrated within, the host vehicle 102. Although illustrated as a car, the host vehicle 102 can represent other types of vehicles and machinery (e.g., a motorcycle, a bus, a tractor, a semi-trailer truck, watercraft, aircraft, or other heavy equipment) including manned and unmanned systems that may be used for a variety of purposes. The host vehicle 102 may operate in an autonomous or semi-autonomous mode.

In general, manufacturers can mount V2V and radar sensors/antennas to any moving platform that can travel in the environment 100. The sensors/antennas can project their respective field-of-view (FOV) from any exterior surface of the host vehicle 102. For example, vehicle manufacturers can integrate at least a part of the radar system 106 (e.g., the radar sensors/antennas) into a side mirror, bumper, roof, or any other interior or exterior location where the FOV includes a portion of the environment 100 and objects moving or stationary that are in the environment 100. Manufacturers can design the location of the sensors/antennas to provide a particular FOV that sufficiently encompasses portions of the environment 100 in which the host vehicle 102 may be traveling. In the depicted implementation, a portion of the V2V system 104 and a portion of the radar system 106 are mounted near the front bumper section of the host vehicle 102.

The V2V system 104 can communicate with other vehicles in the environment 100 that are also equipped with V2V systems. For example, a vehicle 108 in the environment 100 includes a V2V system 110. The V2V system 104 and the V2V system 110 can communicate to one another via a wireless communication link 112. The data conveyed via the wireless communication link 112 by the V2V system 104 and the V2V system 110 to one another may include vehicle information such as speed, location, and heading information of their respective vehicles. Likewise, other vehicles (not illustrated) in the environment 100 that are equipped with V2V systems can transmit similar data and receive similar data from other vehicles with V2V systems. Generally, the V2V communications data represents accurate and precise information about the vehicle from which the data originates.

The radar system 106 can transmit radar signals (e.g., electromagnetic radiation) that can be reflected off of objects in the environment 100 (e.g., the vehicle 108) and receive the reflected signals (e.g., as receive signals 114). In this example, the receive signals 114 includes radar data (e.g., range data, range rate data, and azimuth data) describing the vehicle 108. The radar system 106 may use this data, often by utilizing a trained model, to predict future driving actions (e.g., acceleration and braking actions, turning actions) of the vehicle 108.

In the environment 100, the radar system 106 of the host vehicle 102 is one type of a sensor-tracking system. In other examples, the techniques described herein may be applied to other types of sensor-tracking systems including camera systems, lidar systems, ultrasonic systems, or any other sensor systems used to identify, track, and/or avoid objects by the host vehicle 102 in the environment 100. Additionally, for simplicity in describing this example, the radar system 106 includes the sensor and any object detection and tracking features (e.g., object-tracking modules, sensor-fusion modules, models assisting in the implementation of these features). In some examples, the sensor and the object detection and tracking features may be represented by different and/or separate systems.

The V2V communications data received by the V2V system 104 from the V2V system 110 and the radar data related to the vehicle 108 received by the radar system 106 can be collected by a data set collector module 116. The V2V communications data is collected as label data set 118. Similarly, the radar data is collected and stored as radar data set 120. A model training system 122 can receive the label data set 118 and the radar data set 120. The model training system 122 trains or retrains a model to be used by the radar system 106 in assisting the radar system 106 in predicting and tracking objects in the environment 100. The label data set 118 can serve as the ground truth and the radar data can be used as input data for training (or retraining) a model. The model training system 122 can include instructions to be executed by a processor (e.g., electronic control unit (ECU)) installed on the host vehicle 102. Alternatively, or additionally, the model training system 122 (or portions thereof) may be executed remotely (e.g., a cloud environment) to the host vehicle 102.

The model training system 122 uses the label data set 118 and the radar data set 120 to update the model for the radar system 106. In some implementations, the label data set 118 and the radar data set 120 can be an aggregate of label data sets and radar data sets collected by multiple host vehicles. After the model is updated, it can be deployed to the radar system 106. Using the updated model, the radar system 106 may be more accurate and reliable in predicting the actions of objects in the environment 100.

### EXAMPLE SYSTEMS

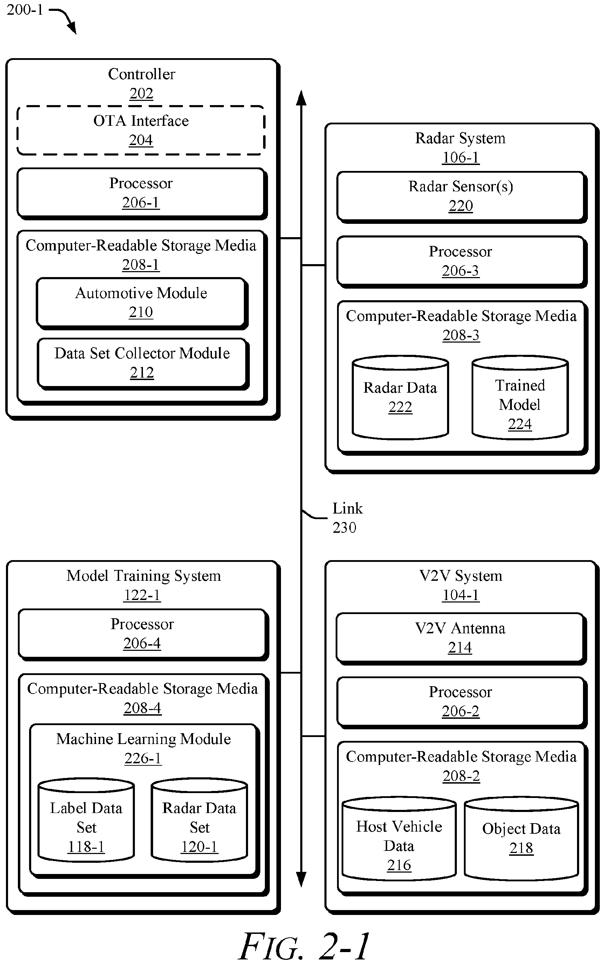

FIG. 2-1 illustrates an example of an automotive system 200-1 for improving accuracy of predictions on radar data using V2V technology, in accordance with techniques of this disclosure. The automotive system 200-1 can be integrated within the host vehicle 102. For example, the automotive system 200-1 includes a controller 202, a V2V system 104-1, a radar system 106-1, and a model training system 122-1. The V2V system 104-1 is an example of the V2V system 104, the radar system 106-1 is an example of the radar system 106, and the model training system 122-1 is an example of the model training system 122. The V2V system 104-1 and the radar system 106-1 can be integrated into an automotive or other vehicular environment. In this example, the model training system 122-1 is integrated into the host vehicle 102. In some implementations, an additional model training system may be remote (e.g., in the cloud) to the vehicle and can train a sensor model concurrent with the model training system 122-1, e.g., in an offline fashion.

The V2V system 104-1, the radar system 106-1, the model training system 122-1, and the controller 202 communicate over a link 230. The link 230 may be a wired or wireless link and in some cases includes a communication bus.

The controller 202 performs operations based on information received over the link 230, such as data output from the V2V system 104-1 or the radar system 106-1 as objects in an environment (e.g., the environment 100) are identified from the data. The controller 202 includes an over-the-air (OTA) interface 204 (optional in this implementation), a processor 206-1, and a computer-readable storage media (CRM) 208-1 (e.g., a memory, long-term storage, short-term storage), which stores instructions for an automotive module 210.

The CRM 208-1 can include a data set collector module 212. The data set collector module 212 can store object information derived from data obtained by the V2V system 104-1 and the radar system 106-1, including the label data set 118 and the radar data set 120 illustrated in FIG. 1. Alternatively, the data set collector module 212 may reside on any CRM 208 integrated within the host vehicle 102.

The V2V system 104-1 includes a V2V antenna 214, a processor 206-2, and a CRM 208-2, which stores host vehicle data 216 and object data 218. The V2V system 104-1 can transmit, via the V2V antenna 214, the host vehicle data 216 as V2V communications data to other vehicles or objects equipped with V2V systems through the wireless communication link 112. Likewise, the V2V system can receive, via the V2V antenna 214, V2V communications data from other vehicles equipped with V2V systems as the object data 218.

The host vehicle data 216 and the object data 218 can include information (e.g., vehicle speed, location, heading, classification) about the respective vehicle and is considered more accurate and precise than sensor data (e.g., radar data). The label data set 118 of the data set collector module 212 can be derived from the object data 218.

The radar system 106-1 includes one or more radar sensors 220, a processor 206-3, and a CRM 208-3, which includes radar data 222 and a trained model 224. The CRM 208-3 also includes instructions for performing sensor operations. The radar system 106-1 can receive signals (e.g., the receive signals 114) reflected from nearby objects and can store the data as the radar data 222. The radar system 106-1 can detect and track objects in the FOV using the radar data 222. The radar data 222, when input to the trained model 224, can provide more accurate and reliable detections and classifications of objects, which the radar system 106-1 can output to the automotive module 210.

The radar data set 120 of the data set collector module 212 can be derived from the radar data 222. The trained model 224 may initially be trained using a generic radar data set and a label data set not derived from V2V communications data. As described in this disclosure, subsequent trained models 224 may include training using the label data set 118 and the radar data set 120.

The model training system 122-1 includes a processor 206-4 and a CRM 208-4, which stores instructions for a machine learning module 226-1. The dedicated processor 206-4 enables the model training system 122-1 to train the trained model 224 without causing disruption to the radar system 106-1 or any other systems of the host vehicle 102. The machine learning module 226-1 receives a label data set 118-1 and a radar data set 120-1 from the data set collector module 212. In some aspects, the training will not start until the quantity of data passes a threshold.

Using the label data set 118-1 as ground truth data and the radar data set 120-1 as input, the machine learning module 226-1 can train the trained model 224 or retrain a previously trained model 224 and can deploy the updated trained model 224 to the radar system 106-1. In some aspects, before the trained model 224 is deployed, the trained model 224 can be compared to another model (e.g., an initially trained model based on generic radar data and labels, an earlier trained model) for accuracy. If the updated trained model 224 does not outperform the other model, the updated trained model 224 may not be deployed.

The machine learning module 226-1 may train the trained model 224 using machine learning techniques, such as supervised learning, to perform object detection, object tracking, and/or object classification. The trained model 224 may include one or more artificial neural networks (e.g., long short-term memory (LSTM) networks, recurrent neural networks (RNN), convolution neural networks (CNN)). The output of the trained model 224 (e.g., predictions about objects) can be used by the automotive module 210 for driving applications.

Generally, the automotive system 200-1 executes the automotive module 210 to perform an automotive function, which may include using output from the radar system 106-1. For example, the automotive module 210 can provide automatic cruise control and monitor the radar system 106-1 for output that indicates the presence of objects in or near the FOV, for instance, to slow the speed and prevent a rear-end collision with the vehicle 108. In such an example, the trained model 224 can output object information to the automotive module 210. The automotive module 210 may provide alerts or perform a specific maneuver when the data obtained from the radar system 106-1 indicates that one or more objects are crossing in front of the host vehicle 102. By training the trained model 224 using the radar data 222 as input and the object data 218 as ground truth data, the accuracy and reliability of the radar system 106-1 may be improved.

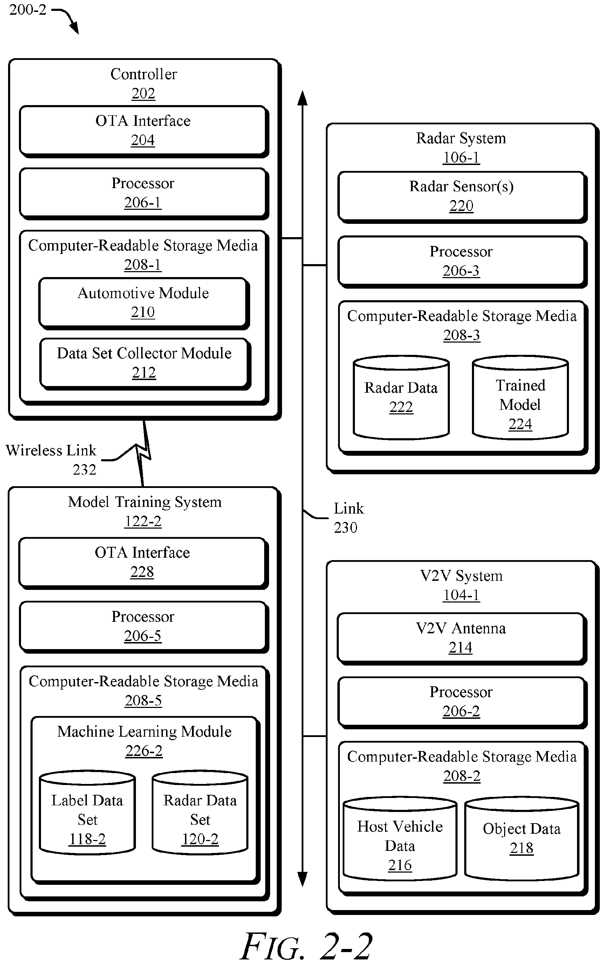

FIG. 2-2 illustrates another example of an automotive system 200-2 for improving accuracy of predictions on radar data using V2V technology, in accordance with techniques of this disclosure. Similar to the automotive system 200-1, the automotive system 200-2 includes the controller 202, the V2V system 104-1, and the radar system 106-1. The controller 202 includes the OTA interface 204 through which the controller 202 can communicate to a model training system 122-2. The controller 202 and the model training system 122-2 can communicate through wireless link 232 (e.g., WiFi link, cellular link). In other aspects, the OTA interface 204 and the data set collector module 212 may be in a different system or module (e.g., the V2V system 104-1, the radar system 106-1, the model training system 122-1, a dedicated controller (not illustrated) integrated within the host vehicle 102). Optionally, the automotive system 200-2 can, likewise, include a model training system 122-1 that operates according to the description with respect to FIG. 2-1.

As illustrated in FIG. 2-2, the model training system 122-2 is remote (e.g., resides on a cloud-based server) to the rest of the automotive system 200-2. The model training system 122-2 includes an OTA interface 228 used to communicate on the wireless link 232. Similar to the model training system 122-1, the model training system 122-2 includes a processor 206-5, a CRM 208-5 which stores instructions for a machine learning module 226-2 to train or retrain a trained model 224, and the model training system 122-2 may use the same training methods and techniques as the model training system 122-1. Different than the model training system 122-1, the machine learning module 226-2 of the model training system 122-2 includes a label data set 118-2 (e.g., truth data) and a radar data set 120-2 (e.g., input data) that includes more data than that of the model training system 122-1. By residing remotely to the automotive system 200-2, the model training system 122-2 can receive input from a plurality of automotive systems 200-2. Further, the model training system 122-2 can include an artificial neural network that is common to each radar system 106-1 of each automotive system 200-2 of the plurality of automotive systems 200-2. This enables the model training system 122-2 to use data acquired from each radar system 106-1 even if each radar system 106-1 is different or has different properties due to discretions of mounting or calibration between each radar system 106-1. The label data set 118-2 and the radar data set 120-2 can include an aggregate of data from the plurality of automotive systems 200-2. Because each automotive system 200-2 of the plurality of automotive systems 200-2 may experience different driving conditions (e.g., dense metropolitan conditions, sparse rural conditions, city streets, interstates, and others), the label data set 118-2 and the radar data set 120-2 can contain large amounts of data that includes the different driving conditions. In this manner, the machine learning module 226-2 can train the trained model 224 with the large amounts of data that includes the different driving conditions. The updated trained model 224 may be highly accurate in relation to many different driving conditions in many different environments. This may improve reliability and safety for any vehicle 108 with the updated trained model 224 regardless of the environment in which it travels.

### EXAMPLE IMPLEMENTATIONS

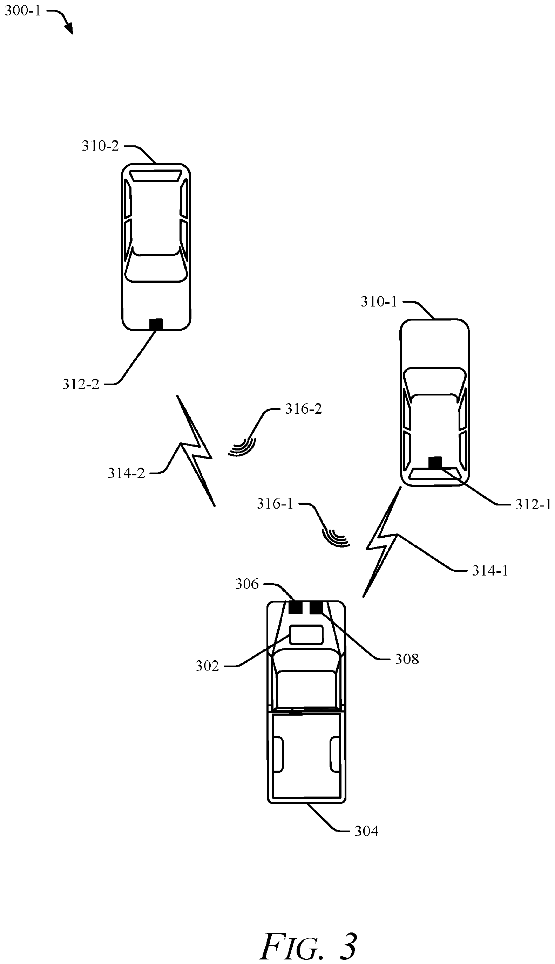

FIG. 3 illustrates an example implementation 300 using a local model training system 302 for improving accuracy of predictions on radar data using V2V technology, in accordance with techniques of this disclosure. A host vehicle 304 has an automotive system, similar to the automotive system 200-1, that includes a V2V system 306, a radar system 308, and a model training system 302 (e.g., the model training system 122-1) is traveling in an environment that includes objects 310-1 and 310-2. Objects 310-1 and 310-2 include V2V systems 312-1 and 312-2, respectively. The V2V systems 306 and 312-1 can communicate via the wireless link 414-1, and the V2V systems 306 and 312-2 can communicate via the wireless link 414-2. The radar system 308 receives reflected signals 316-1 and 316-2 from objects 310-1 and 310-2, respectively.

The V2V system 306 can receive V2V communications data from the objects 310-1 and 310-2 that can include the vehicle velocity, location, heading, and classification of the objects 310-1 and 310-2. Likewise, the radar system 308 can detect radar data from the objects 310-1 and 310-2 that complements the V2V communications data of the objects 310-1 and 310-2.

The V2V communications data and the radar data can be collected and retained in a data set collector module. As the host vehicle 304 encounters different objects 310, data from each of the objects 310 can be collected in the data set collector module. In some aspects when enough data is collected to surpass a threshold, the model training system 302 can begin the training process on a radar model of the radar system 308. The model training system 302 may not disrupt the operations of the radar system 308 as the training is performed. Once the radar model is updated, the model training system 302 can deploy the updated model to the radar system 308. The updated model may contain data that accounts for the different driving environments and conditions that the host vehicle 304 has experienced to the point of the training process. By accumulating V2V communications data and radar data from other vehicles as the host vehicle 304 encounters them, the data sets used to train the radar model can continue to grow. Larger data sets enable more accurate training. More accurate training may increase the reliability of the radar system 308 and the safety of the host vehicle 304.

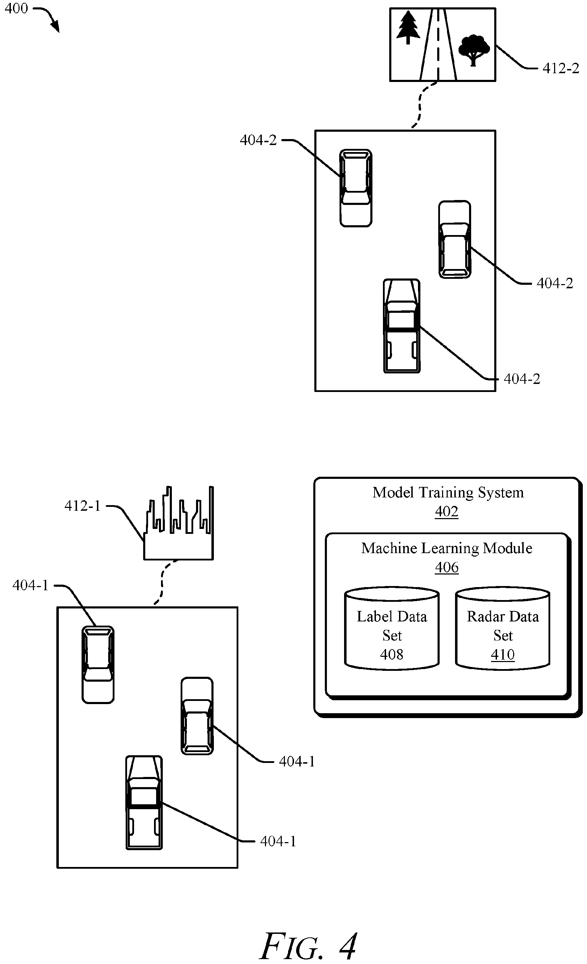

FIG. 4 illustrates another example implementation 400 using a remote model training system 402 for improving accuracy of predictions on radar data using V2V technology, in accordance with techniques of this disclosure. The model training system 402 resides remotely from host vehicles 404, including a first group of host vehicles 404-1 and a second group of host vehicles 404-2. That is, the model training system 402 may reside on a cloud-based server or other computational device that is located outside of any host vehicle 404. The host vehicles 404 may communicate with the model training system 402 via wireless communications such as a WiFi connection or a cellular connection (e.g., 4G, 5G). The model training system 402, similar to the model training system 122-2 described with reference to FIG. 2-2, includes a machine learning module 406 that stores instructions to train a radar model using a label data set 408 as label data and a radar data set 410 as input to the machine learning module 406.

In the example implementation 400, the host vehicles 404-1 are traveling in a metropolitan environment 412-1 with dense traffic, and the host vehicles 404-2 are traveling in rural environment 412-2 with less traffic density than the environment 412-1. The environments 412 can represent any environments with many different levels of traffic density and driving conditions. For example, the environments 412 may represent interstate travel versus traveling on city streets. As the host vehicles 404 travel in their respective environments 412, they can encounter other host vehicles 404 and other vehicles that include V2V systems (not illustrated) but are not host vehicles.

The host vehicles 404 are able to communicate with the model training system 402. The host vehicles 404 can collect V2V communications data and radar data from one another and from the other vehicles. The collected V2V communications data and radar data can be transmitted to the model training system 402. In some aspects, the data is transmitted from the host vehicles to the model training system after a quantity of data has been collected that exceeds a threshold. The model training system 402 can receive the data from each of the host vehicles to use as a label data set 408 and a radar data set 410. The label data set 408 is derived from the collected V2V communications data from each of the host vehicles 404, and the radar data set 410 is derived from the collected radar data from each of the host vehicles 404. By collecting data from a plurality of host vehicles 404, the label data set 408 and the radar data set 410 may each grow to be large. Additionally, because the host vehicles 404 are traveling in different environments and under different driving conditions, the label data set 408 and the radar data set 410 can include a wide variety of traffic conditions.

After the machine learning module 406 updates a radar model (used by the radar systems of the host vehicles) using the label data set 408 and the radar data set 410, the model training system 402 can deploy the updated radar model to each of the host vehicles 404. The updated radar model can include traffic scenarios not normally traveled by each of the host vehicles 404. In other words, the updated radar model can include rural traffic conditions for the host vehicles 404-1 that may not generally travel in rural areas, and the updated radar model can include metropolitan travel conditions for the host vehicles 404-2 that may not generally travel in dense traffic. The updated radar model may include a wide variety of traffic conditions and densities. Thus, the updated radar model may provide more reliability and safety for each of the host vehicles 404, regardless of the environment in which they may encounter.

### EXAMPLE METHODS

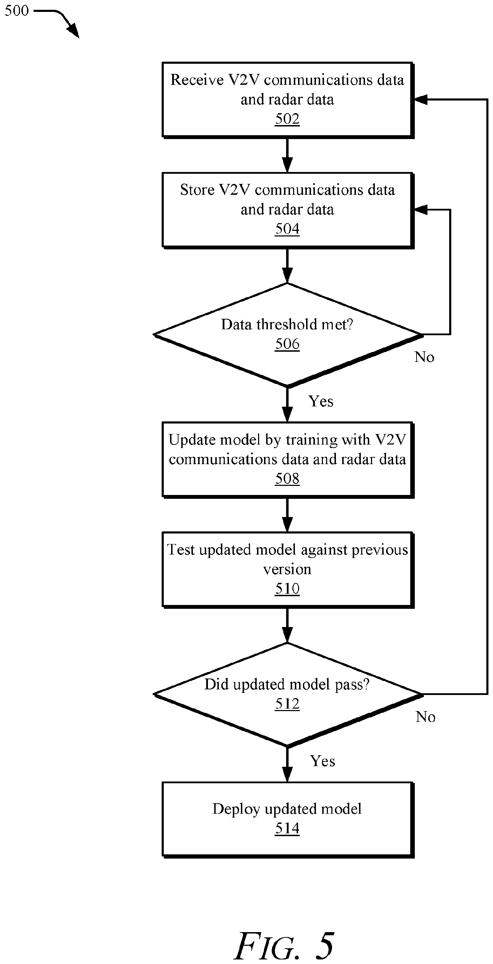

FIG. 5 illustrates an example flowchart 500 for improving accuracy of predictions on radar data using V2V technology, in accordance with techniques of this disclosure. The operations (or steps) 502 through 514 are performed but are not necessarily limited to the order or combinations in which the operations are shown herein. Further, any of one or more of the operations may be repeated, combined, or reorganized to provide other operations.

At step 502, V2V communications data and radar data related to an object are received by a host vehicle. The V2V communications data can include classification, location, heading, and speed of the object (e.g., another vehicle). The radar data can include range, range rate, and azimuth of the object.

At step 504, the V2V communications data and the radar data are collected and retained in a CRM. The V2V communications data and the radar data are retained until a minimum quantity of V2V communications data and the radar data is collected.

At step 506, the quantity of V2V communications data and the radar data is checked. If the quantity exceeds a threshold, then the V2V communications data and the radar data may be used in step 508. If the quantity of V2V communications data and the radar data is below the threshold, then more V2V communications data and radar data are collected and the quantity can be rechecked.

At step 508, a radar model is updated by training the radar model. The training may be performed using machine learning techniques. The V2V communications are used as truth data (e.g., a label data set). The radar data is used as input for training the model.

At step 510, the updated radar model is tested for accuracy. A safety check is performed on the updated radar model with respect to a production model. The safety check includes comparing the updated radar model and the production model for maximum deviation. If the updated radar model outperforms the production model, then the updated model passes the safety check.

At step 512, if the updated radar model passes the safety check, the updated model is deemed deployable. If the updated radar model fails the safety check, then the process is repeated from step 502 until an updated radar model passes the safety check.

At step 514, the updated radar model is deployed to the host vehicle. By using a large data set (e.g., the V2V communications data and the radar data) the updated radar model may accurately predict the path and speed of objects in the same environment as the host vehicle. The radar model may enable automotive systems of the host vehicle to make safe driving decisions as it travels in an environment.

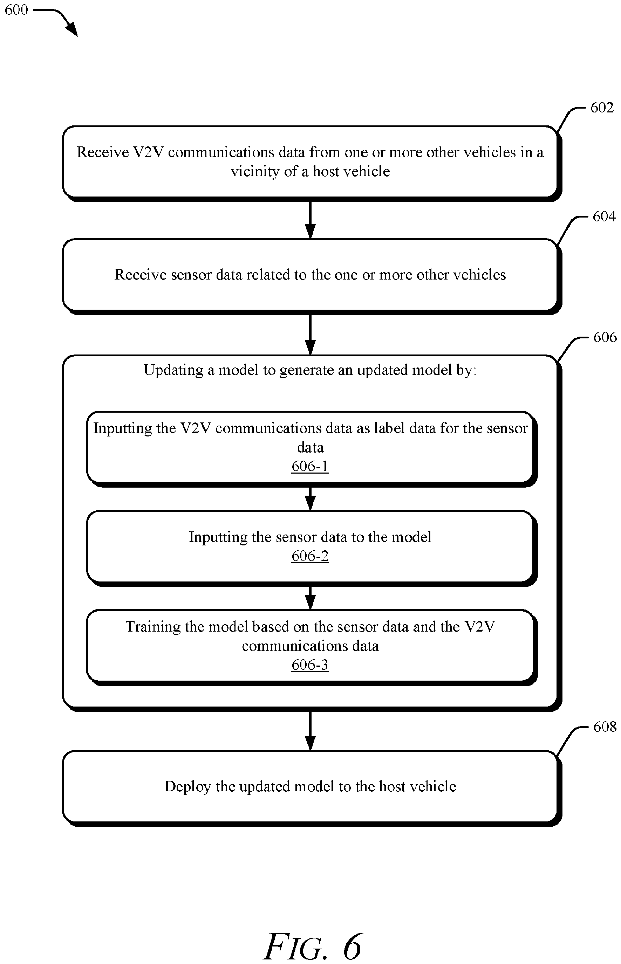

FIG. 6 illustrates an example method for improving accuracy of predictions on radar data using V2V technology, in accordance with techniques of this disclosure. The operations (or steps) 602 through 608 are performed but are not necessarily limited to the order or combinations in which the operations are shown herein. Further, any of one or more of the operations may be repeated, combined, or reorganized to provide other operations.

At step 602, V2V communications data from one or more other vehicles in a vicinity of a host vehicle is received by the host vehicle. The V2V communications data is generally considered to be accurate and precise data and can include location data, heading data, velocity data, and classification of each of the one or more other vehicles.

At step 604, sensor data related to the one or more other vehicles is received by the host vehicle. This disclosure generally describes the sensor data in context to a radar sensor; however, the sensor may be any sensor used by a vehicle to safely travel through an environment. Some examples of other sensors include lidar, cameras, and ultrasonic sensors.

At step 606, a model, used by the sensor, is updated to generate an updated model. The model is updated by applying steps 606-1 through 606-3. At step 606-1, the V2V communications data is input as label data for the sensor data. At step 606-2, the sensor data is input into the model. At step 606-3, the model is trained based on the sensor data and the V2V communications data. In some aspects, the model is trained on a dedicated ECU integrated within the host vehicle. A model trained in this manner may include traffic-related information for the environments in which the host vehicle travels. In other aspects, the model is trained remotely to the host vehicle. The V2V communications data and the sensor data used to train the model can include data received by multiple host vehicles traveling in a variety of environments. By including data of multiple host vehicles, the data set (e.g., the label data set and the sensor data set) used to train the model can be very large compared to other available data sets.

At step 608, the updated model is deployed to the host vehicle. By receiving large quantities of data and training the model with the large quantities of data, the updated model may accurately predict object-tracking in a variety of driving environments. The host vehicle may use the updated model to safely travel in an environment.

### ADDITIONAL EXAMPLES

Example 1: A method comprising: receiving, from a V2V communications platform of a host vehicle, V2V communications data from one or more other vehicles in a vicinity of the host vehicle; receiving sensor data generated by a sensor system of the host vehicle indicative of the one or more other vehicles; updating a model to generate an updated model by: inputting the V2V communications data from the one or more other vehicles as label data for the sensor data; inputting the sensor data to the model; and training the model based on the sensor data and the V2V communications data; and deploying the updated model to the host vehicle for detecting and tracking objects in the vicinity of the host vehicle.

Example 2: The method of example 1, further comprising: operating the host vehicle in an autonomous or semi-autonomous mode based on the updated model.

Example 3: The method of any one of the preceding examples, wherein the updated model is generated by the host vehicle.

Example 4: The method of any one of the preceding examples, wherein updating the model to generate the updated model is performed: utilizing a first processor and a first computer-readable storage media, the first processor and the computer-readable storage media being different from a second processor and a second computer-readable storage media, the second processor and the second computer-readable storage being used for sensor operations of the host vehicle.

Example 5: The method of any one of the preceding examples, wherein: the host vehicle represents a plurality of host vehicles; the updated model is trained, using a common artificial neural network to each sensor system of each host vehicle of the plurality of host vehicles, remotely in relation to the plurality of host vehicles; and the updated model is deployed to the plurality of host vehicles.

Example 6: The method of any one of the preceding examples, wherein the updated model is deployed to the plurality of host vehicles via an over-the-air update.

Example 7: The method of any one of the preceding examples, wherein the updated model is also trained at each of the plurality of host vehicles.

Example 8: A system comprising: one or more processors configured to: receive, from a V2V communications platform of a first vehicle, V2V communications data from one or more other vehicles in a vicinity of the first vehicle; receive, from a sensor system of the first vehicle, sensor data related to the one or more other vehicles; update a model to generate an updated model by: inputting, to the model, the V2V communications data from the one or more other vehicles as label data for the sensor data; inputting the sensor data to the model; and training the model based on the sensor data and the V2V communications data; and deploy the updated model to the first vehicle for detecting and tracking objects in the vicinity of the first vehicle.

Example 9: The system of any one of the preceding examples, wherein: the first vehicle represents a plurality of host vehicles; the updated model is trained remotely in relation to the plurality of host vehicles; and the updated model is deployed to the plurality of host vehicles.

Example 10: The system of any one of the preceding examples, wherein the updated model is deployed to the plurality of host vehicles via an over-the-air update.

Example 11: The system of any one of the preceding examples, wherein the updated model is also trained on a separate system installed on each of the plurality of host vehicles.

Example 12: The system of any one of the preceding examples, wherein at least a first group of host vehicles of the plurality of host vehicles operates in a first environment different from a second environment in which at least a second group of host vehicles of the plurality of host vehicles operates.

Example 13: The system of any one of the preceding examples, wherein the model is updated based on a quantity of the V2V communications data received and the sensor data received exceeding a threshold.

Example 14: The system of any one of the preceding examples, wherein the one or more processors are further configured to: compare the updated model to a production model; and responsive to the updated model outperforming the production model, deploy the updated model.

Example 15: The system of any one of the preceding examples, wherein the V2V communications data for each respective other vehicle comprises: location data; heading data; and velocity data.

Example 16: The system of any one of the preceding examples, wherein the model was previously trained, and wherein the model is continuously trained.

Example 17: The system of any one of the preceding examples, wherein the sensor system comprises a radar system.

Example 18: The system of any one of the preceding examples, wherein the sensor data comprises: range data; range rate data; and azimuth data.

Example 19: A system comprising: one or more processors configured to: receive, from a V2V communications platform of a host vehicle, V2V communications data from one or more other vehicles in a vicinity of the host vehicle; receive, from a sensor system of the host vehicle, sensor data related to the one or more other vehicles; update a model to generate an updated model by: inputting, to the model, the V2V communications data from the one or more other vehicles as label data for the sensor data; inputting the sensor data to the model; and training the model based on the sensor data and the V2V communications data; and output the updated model to the host vehicle for detecting and tracking objects in the vicinity of the host vehicle.

Example 20: The system of any one of the preceding examples, wherein the system is part of the host vehicle.

Example 21: A system comprising means for performing the method of any of the preceding examples.

Example 22: A system comprising at least one processor configured to perform the method of any of the preceding examples.

Example 23: A computer-readable storage media comprising instructions that, when executed, cause a processor to perform the method of any of the preceding examples.

Example: 24: The system of any one of the preceding claims, wherein the one or more processors are further configured to: receive, from the V2V communications platform of the first vehicle, additional V2V communications data from the one or more other vehicles; receive, from the sensor system of the first vehicle, additional sensor data related to the one or more other vehicles; further update the model to generate the updated model by: determining, based on the additional V2V communications data, ground truth data for the additional sensor data; updating the model based on the ground truth data; and inputting the additional sensor data to the model; and deploy the updated model to the first vehicle for detecting and tracking objects in the vicinity of the first vehicle.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims. Problems associated with collecting large data sets for model training can occur in other systems. Therefore, although described as a way to improve accuracy of predictions on radar data using V2V technology, the techniques of the foregoing description can be applied to other systems that would benefit from building large data sets to be used to train models. Further, these techniques may also be applied to other communications data, such as V2I, V2P, and V2X.

The use of "or" and grammatically related terms indicates non-exclusive alternatives without limitation unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A system comprising:
one or more processors configured to:
receive, from a vehicle-to-vehicle (V2V) communications platform of a first vehicle, V2V communications data from one or more other vehicles in a vicinity of the first vehicle;
receive, from a sensor system of the first vehicle, sensor data related to the one or more other vehicles;
update a model to generate an updated model by:
inputting, to the model, the V2V communications data from the one or more other vehicles as label data for the sensor data;
inputting the sensor data to the model; and
training the model based on the sensor data and the V2V communications data; and
deploy the updated model to the first vehicle for detecting and tracking objects in the vicinity of the first vehicle.

2. The system of claim 1, wherein:
the first vehicle represents a plurality of host vehicles;
the updated model is trained remotely in relation to the plurality of host vehicles; and
the updated model is deployed to the plurality of host vehicles.

3. The system of claim 2, wherein the updated model is deployed to the plurality of host vehicles via an over-the-air update.

4. The system of claims 2 or 3, wherein the updated model is also trained on a separate system installed on each of the plurality of host vehicles.

5. The system of any one of the claims 2 through 4, wherein at least a first group of host vehicles of the plurality of host vehicles operates in a first environment different from a second environment in which at least a second group of host vehicles of the plurality of host vehicles operates.

6. The system of any one of the preceding claims, wherein the model is updated based on a quantity of the V2V communications data received and the sensor data received exceeding a threshold.

7. The system of any one of the preceding claims, wherein the one or more processors are further configured to:
compare the updated model to a production model; and
responsive to the updated model outperforming the production model, deploy the updated model.

8. The system of any one of the preceding claims, wherein the V2V communications data for each respective other vehicle comprises:
location data;
heading data; and
velocity data.

9. The system of any one of the preceding claims, wherein the model was previously trained, and wherein the model is continuously trained.

10. The system of any one of the preceding claims, wherein the sensor system comprises a radar system.

11. The system of any one of the preceding claims, wherein the sensor data comprises:
range data;
range rate data; and
azimuth data.

12. The system of any one of the preceding claims, wherein the one or more processors are further configured to:
receive, from the V2V communications platform of the first vehicle, additional V2V communications data from the one or more other vehicles;
receive, from the sensor system of the first vehicle, additional sensor data related to the one or more other vehicles;
further update the model to generate the updated model by:
determining, based on the additional V2V communications data, ground truth data for the additional sensor data;
updating the model based on the ground truth data; and
inputting the additional sensor data to the model; and
deploy the updated model to the first vehicle for detecting and tracking objects in the vicinity of the first vehicle.

13. The system of any one of the preceding claims, wherein the system is part of the first vehicle.

14. A method comprising:
receiving, from a vehicle-to-vehicle (V2V) communications platform of a host vehicle, V2V communications data from one or more other vehicles in a vicinity of the host vehicle;
receiving sensor data generated by a sensor system of the host vehicle indicative of the one or more other vehicles;
updating a model to generate an updated model by:
inputting the V2V communications data from the one or more other vehicles as label data for the sensor data;
inputting the sensor data to the model; and
training the model based on the sensor data and the V2V communications data; and
deploying the updated model to the host vehicle for detecting and tracking objects in the vicinity of the host vehicle.

15. A system comprising means for performing the method of claim 14.
